# FASCICULE DE BREVET EUROPEEN

(11) **EP 0 614 335 B1**
(45) Date de publication et mention de la délivrance du brevet: **01.05.1996**
(21) Numéro de dépôt: 93901771.1
(22) Date de dépôt: 25.11.1992
(51) Int. Cl.: A22C 13/00, A22C 17/14, A22C 11/02

(54) **GAINE SOUPLE POUR LE TRANSFERT DE BOYAUX SUR CANULE D'EMBOSSAGE**
BIEGSAME HÜLLE ZUM AUSBRINGEN VON SCHLAUCHHÜLLEN AUF EIN FÜLLROHR
FLEXIBLE SHEATH FOR THE TRANSFER OF CASINGS TO A STUFFING CANULA

(30) Priorité: 26.11.1991 FR 9114582
(43) Date de publication de la demande: 14.09.1994
(73) Titulaire: LAMY, Christian, F-37260 Artannes-Indre (FR)
(72) Inventeur: LAMY, Christian, F-37260 Artannes-Indre (FR)
(74) Mandataire: Ahner, Francis
(86) Numéro de dépôt international: FR9201096
(87) Numéro de publication internationale: WO9310663

(56) Documents cités:
- WO-A-90/13226
- CH-A- 407 794
- DE-A- 2 733 996
- FR-A- 2 462 871
- GB-A- 998 410
- US-A- 1 837 280
- US-A- 3 826 852

## Description

La présente invention concerne une gaine souple destinée au transfert des boyaux utilisés en charcuterie sur canule d'embossage, pour la fabrication de saucisses ou de saucissons.

Les boyaux utilisés en charcuterie sont généralement des boyaux naturels de moutons, de porcs ou de boeufs. Ils peuvent être employés soit en un seul bout, soit être juxtaposés, soit être chevauchés. Les boyaux sont généralement livrés préassemblés sur des gaines souples ou des tubes rigides, puis transférés sur la canule d'embossage.

De nombreux types de gaines souples en matière plastique sont couramment employés par les charcutiers pour le transfert des boyaux sur canule, notamment la gaine décrite dans le brevet français n° 2 462 871 qui peut être retirée de la canule d'embossage par déchirement suite à un prédécoupage de la gaine. Ce document montre les caractéristiques du préambule de la revendication 1.

Une telle gaine n'est toutefois pas exempte d'inconvénients. En effet, un prédécoupage peut présenter des zones de plus fortes résistances suite à une perforation inégale, ce qui peut provoquer une discontinuité dans le mouvement de retrait de la gaine, et causer localement un dédoublement ou une superposition des boyaux. De plus, lorsque la gaine comprend un double prédécoupage (ceci afin de faciliter la fabrication de la gaine), la rupture simultanée des deux prédécoupages peut entrainer la formation d'une languette en matière plastique qui en cas d'erreur de manipulation peut causer des dommages aux boyaux, voire être entrainée dans la chair à saucisse lors de l'embossage. Enfin, cette gaine n'est pas réutilisable.

Il était donc nécessaire de palier à ces inconvénients. Or, il a été trouvé de manière inattendue que des éléments connus par ailleurs pour la fermeture étanche de sacs d'emballage en matière plastique pouvaient être employés favorablement pour le transfert des boyaux. Ces éléments connus pour la solidité de leur fermeture permettent une ouverture aisée et contrôlée d'une gaine souple destinée au transfert sur canule d'embossage.

La présente invention concerne donc une gaine souple ouvrable longitudinalement, destinée au transfert sur canule d'embossage, constituée d'une ou de plusieurs bandes souples (1) de forme générale oblongue dont les deux côtés opposés longitudinaux sont rectilignes et présentent chacun une nervure en saillie (2) ou une rainure creuse (3) éléments mâle et femelle complémentaires d'une fermeture longitudinale (4) par pression susceptible d'être ouverte et fermée plusieurs fois.

La fermeture des éléments mâle (2) et femelle (3) complémentaires conduit à la formation de la gaine selon l'invention alors que son ouverture permet de la retirer facilement après transfert du boyau sur canule d'embossage.

De telles nervures mâles (2) et rainures femelles (3) formant une fermeture par pression sont décrites dans l'art antérieur, comme par exemple dans les brevets français n° 1 492 413, 1 504 276 ou 1 517 531.

D'une manière préférentielle, la gaine souple selon l'invention est constituée d'au moins une bande (1) de polymère synthétique, notamment de polyéthylène. La fermeture longitudinale (4) susceptible d'être ouverte et fermée plusieurs fois permet par ailleurs une réutilisation de la gaine puisque la fermeture (4), une fois ouverte, peut être refermée de manière à reformer une gaine utilisable pour un nouveau transfert de boyau. Cet aspect annexe et pour le moins inattendu de l'invention n'en est pas moins important puisqu'il permet à la fois de réduire les coûts d'exploitation de la gaine, de préserver l'environnement par réemploi d'une matière synthétique souvent difficile à recycler et de mettre le produit à l'abri d'une hausse toujours possible des matières premières nécessaires à sa fabrication.

La gaine souple peut être constituée d'une bande souple (1) unique refermée sur elle-même par jonction des deux côtés opposés présentant les éléments complémentaires (2,3) de fermeture ou de plusieurs bandes souples (1) reliées entre elles par complémentarité de forme des éléments (2,3) de fermeture longitudinaux ménagés sur chaque côté longitudinal des différentes bandes souples (1).

La gaine souple de la présente invention présente un nombre égal de fermetures longitudinales (4) et de bandes souples (1) qui la constituent. Les bandes (1) oblongues sont généralement de forme rectangulaire ou trapézoïdale. Il n'est pas nécessaire que les éléments mâles (2) ou femelles (3) complémentaires de fermeture sur les deux côtés opposés longitudinaux de la bande souple (1) soient parallèles. En effet, seul leur caractère rectiligne est nécessaire pour assurer la complémentarité des éléments (2,3) de fermeture et une ouverture aisée lors du transfert des boyaux sur canule d'embossage. A cet effet, une bande souple de forme trapézoïdale permet d'obtenir une gaine de forme cônique qui peut faciliter le retrait de cette dernière.

Lorsque la bande souple (1) présente des éléments (2,3) de fermeture (4) parallèles entre eux, cette dernière s'inscrit avantageusement dans un rectangle de longueur comprise entre 10 et 70 cm, préférentiellement entre 20 et 40 cm, avec un rapport longueur/largeur compris entre 2 et 40, préférentiellement compris entre 10 et 35.

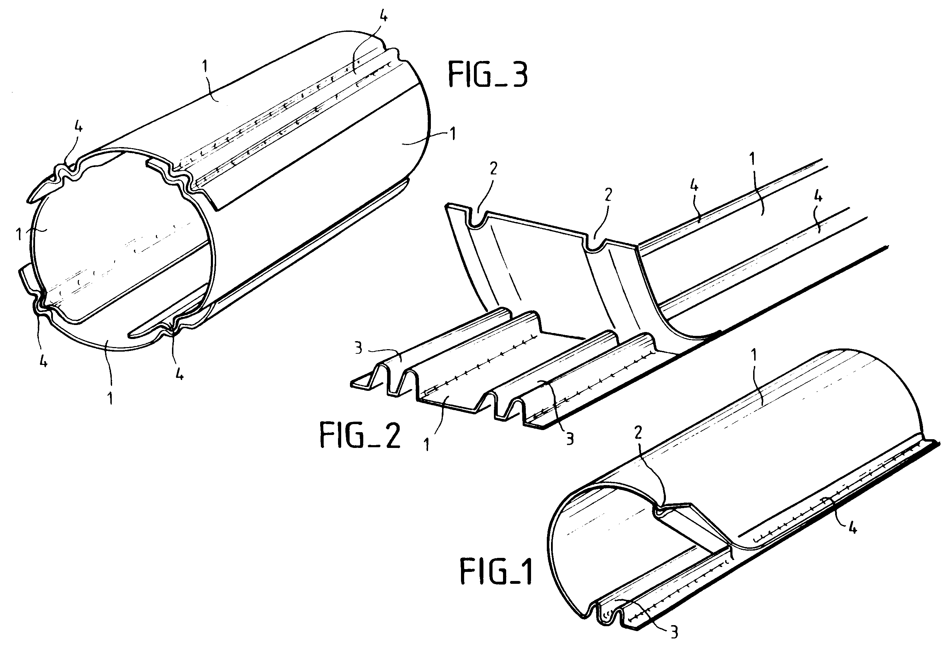

Les figure 1 à 3 représentent trois exemples particuliers de gaines illustrant la présente invention sans chercher à en limiter la portée. La description suivante de ces modes de réalisations préférentielles de l'invention permettra d'en dégager ses principales caractéristiques.

La figure 1 représente une gaine souple selon l'invention constituée d'une bande souple (1) unique. Elle présente sur ses deux côtés opposés dans le sens de la longueur, d'un coté une nervure pleine (2), élément mâle, et de l'autre côté, une rainure creuse (3), élément femelle, complémentaires d'une fermeture (4). La gaine est formée, refermée sur elle-même en joignant les deux côtés supportant les éléments complémentaires.

Les figures 2 et 3 représentent des modèles de gaines constitués de plusieurs bandes souples (1). La figure 2 représente une gaine constituée de deux bandes (1) liées par deux fermetures longitudinales. Dans ce cas particulier, une première bande (1) supporte les deux éléments mâles (2) de la fermeture (4), alors que la seconde bande (1) supporte les deux éléments femelles (3) complémentaires correspondants, nécessaires aux deux fermetures longitudinales (4), joignant les deux bandes souples (1), de manière à former une gaine à deux éléments. Il peut évidemment être envisagé de former une même gaine à deux éléments en joignant deux bandes souples (1) supportant chacune un élément mâle (2) et un élément femelle (3) comme représenté sur la figure 1, la gaine étant formée par la jonction de l'élément mâle (2) d'une bande (1) avec l'élément femelle (3) de l'autre bande (1) de manière à former les deux fermetures longitudinales (4) nécessaires pour obtenir une gaine selon l'invention. La figure 3 est une variante à quatre bandes souples (1) et quatre fermetures longitudinales (4) de la gaine de la figure 2.

On notera dans tous les cas que le nombre total d'éléments mâles (2) et le nombre total d'éléments femelles (3) complémentaires nécessaire pour obtenir une gaine sont égaux aux nombres de bandes souples qui la constituent.

La gaine souple selon l'invention est apte à s'ouvrir longitudinalement de façon aisée par simple traction sur la gaine. Cette traction entraine l'ouverture de l'une des fermetures longitudinales (4) de la gaine par écartement des éléments mâle (2) et femelle (3) qui la constituent à partir de l'extrémité de la gaine sur laquelle est exercée la traction. Les éléments mâle (2) et femelle (3) complémentaires peuvent être préalablement écartés à cette même extrémité, de manière à favoriser l'ouverture de la fermeture longitudinale (4) par simple traction.

Dans le cas d'une gaine constituée de plusieurs bandes souples (1), telles que représentées par les figures 2 et 3, la gaine pourra également être ouverte par traction sur au moins l'une des bandes qui la constituent, de manière à faire glisser dans l'axe de la gaine les éléments mâles (2) d'au moins deux fermetures longitudinales (4) dans leurs éléments femelles (3) complémentaires.

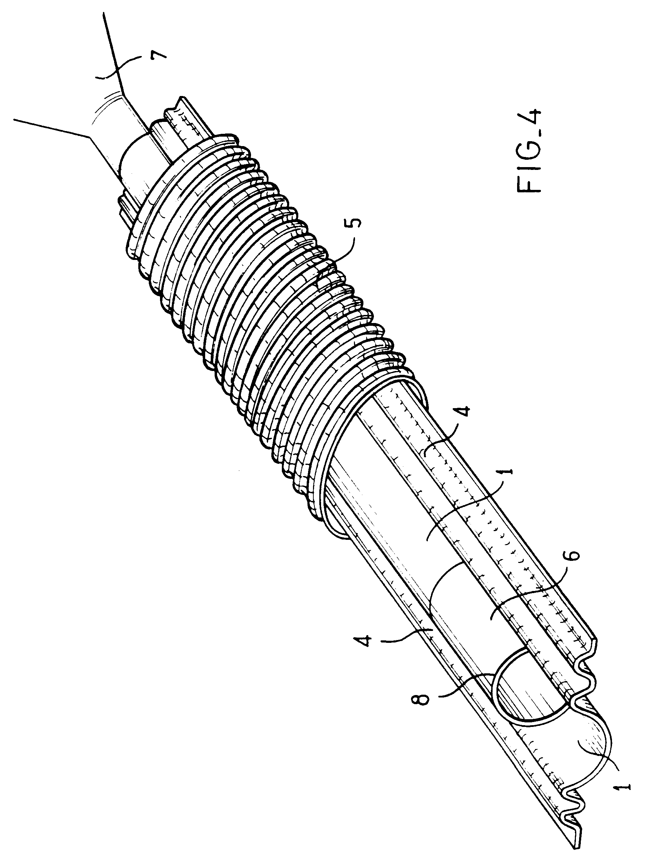

La figure 4 illustre l'exemple d'une gaine souple à deux bandes (1) et deux fermetures (4) supportant le boyau (5) et enfilée sur la canule d'embossage (6). Les différents modes d'ouvertures possibles des fermetures longitudinales (4) sont alors les suivants :
1/ les deux bandes souples (1) sont tirées en directions opposées dans l'axe de la canule (6), l'une vers sa base (7), l'autre vers son extrémité libre (8) de manière à faire glisser l'élément mâle (2) de chaque fermeture (4) dans l'élément femelle (3) complémentaire correspondant, comme variante de ce premier mode d'ouverture, on peut maintenir l'une des bandes (1) sur la canule (6), par l'intermédiaire d'un crochet ou à la main, et tirer l'autre bande (1) dans l'axe de la canule (6) vers son extrémité libre (8).
2/ Les deux bandes souples (1) sont tirées dans la même direction dans l'axe de la canule (6), vers la base (7) de cette dernière et au moins l'une des fermetures (4) est ouverte par le passage d'un guide entre l'élément mâle (2) de la fermeture (4) et son élément femelle (3) complémentaire correspondant ; le guide peut être soit la canule (6), soit sa base (7) ou encore un élément fixé perpendiculairement à cette dernière à proximité de la base (7), notamment par l'intermédiaire d'un système de verrou mobile.

La gaine souple selon la présente invention peut être ouverte en appliquant sur au moins l'une des bandes souples (1) une force de traction inférieure à 0,03N, préférentiellement comprise entre 0,005N et 0,025N.

Pour faciliter la manipulation de la gaine souple selon l'invention, les bandes (1) qui la constituent peuvent être complétées par différents éléments tel que poignées, boucles ou crochets, ou simplement être percées dans la bande (1) à ses extrémités.

Par ailleurs, étant donné que la fermeture doit présenter un bon compromis entre solidité à la traction et ouverture par glissement, l'homme de l'art saura choisir la forme idéale de l'élément mâle (2) de la fermeture (4) et son élément femelle (3) complémentaire, notamment choisi parmi les formes décrite dans les brevets français n° 1 492 413, 1 504 276, 1 517 531, 2 024 327.

Enfin, la présente invention concerne également un procédé pour la mise en place sur canule d'embossage (6) de boyaux (5) utilisés en charcuterie pour la fabrication de saucisses ou de saucissons dans lequel on enfile sur la canule d'embossage (6) une gaine souple selon l'invention définie précédemment, supportant les boyaux (5), puis on retire la gaine souple par ouverture d'au moins une des fermetures longitudinales (4) par force de traction généralement parallèle à l'axe de la canule (6), sur au moins l'une des bandes (1) qui constituent la gaine.

Comme indiqué précédemment, la force nécessaire à l'ouverture des fermetures longitudinales (4) de la gaine étant faible, le mouvement de retrait doux et régulier de cette dernière permet de contrôler correctement le transfert du boyau (5) sur la canule (7). Par ailleurs, il est possible après ce transfert de refermer la gaine et de la réemployer dans des conditions identiques avec une répétition des résultats à chaque transfert.

## Revendications

1. Gaine souple ouvrable longitudinalement support interne de boyaux naturels, destinée à leur transfert sur canule d'embossage, **caractérisée** en ce qu'elle est constituée d'une ou de plusieurs bandes souples (1) de forme générale oblongue dont les deux côtés opposés longitudinaux sont rectilignes et présentent chacun une nervure en saillie (2) ou une rainure creuse (3), éléments mâle et femelle complémentaires d'une fermeture longitudinale (4) par pression, susceptible d'être ouverte et fermée plusieurs fois.

2. Gaine souple selon la revendication 1, **caractérisée** en ce qu'elle est constitué d'une bande souple (1) unique et refermée sur elle-même par fonction des deux côtés opposés présentant les éléments complémentaires (2, 3) de fermeture ou de plusieurs bandes souples (1) reliées entre elles par complémentarité de forme des éléments (2,3) de fermetures longitudinales (4) ménagées sur chaque côté longitudinal des différentes bandes souples (1).

3. Gaine souple, selon l'une des revendications 1 ou 2, **caractérisée** en ce qu'elle présente un nombre égal de fermetures longitudinales (4) et de bandes souples (1) qui la constituent.

4. Gaine souple selon l'une des revendications 1 à 3, **caractérisée** en ce que les bandes souples (1) s'inscrivent dans un rectangle de longueur comprise entre 10 et 70 cm, préférentiellement entre 20 et 40 cm, avec un rapport longueur sur largeur compris entre 2 et 40, préférentiellement compris entre 10 et 35.

5. Gaine souple selon l'une des revendications 1 à 4, **caractérisé** en ce qu'elle est constituée d'une bande souple (1) unique.

6. Gaine souple selon l'une des revendications 1 à 4, **caractérisée** en ce qu'elle est constituée de plusieurs bandes souples (1).

7. Gaine souple selon la revendication 6, **caractérisée** en ce que les bandes souples (1) sont reliées entre elles par l'élément mâle (2) d'une bande (1) joint à l'élément femelle (3) d'une autre bande (1) de manière à former la fermeture (4).

8. Gaine souple selon l'une des revendications 1 à 7, **caractérisée** en ce qu'elle est apte à s'ouvrir de façon aisée par simple traction sur la gaine.

9. Gaine souple selon l'une des revendications 6 ou 7, **caractérisée** en ce qu'elle est apte à s'ouvrir de façon aisée par traction sur au moins l'une des bandes (1) constituant la gaine.

10. Gaine souple selon l'une des revendications 1 à 9, **caractérisée** en ce qu'elle est ouverte en appliquant sur au moins l'une des bandes (1) une force de traction inférieure à 0,03N, préférentiellement comprise entre 0,005N et 0,025N.

11. Procédé pour la mise en place sur canule d'embossage (6) de boyaux (5) utilisés en charcuterie pour la fabrication de saucisses ou de saucissons, **caractérisé** en ce qu'on l'on enfile sur la canule d'embossage (6) une gaine souple définie selon l'une des revendications 1 à 10, supportant les boyaux, puis en ce que l'on retire la gaine souple par ouverture d'au moins l'une des fermetures longitudinales (4) par une force de traction généralement parallèle à l'axe de la canule (6) sur au moins une des bandes (1) qui constituent la gaine.

## Claims

1. Flexible sheath which can be opened longitudinally, internal support for natural casings, and is intended for transferring them onto carrier tube, characterised in that it consists of one or more flexible strips (1) of generally oblong shape whose two longitudinal opposite sides are straight and each have a projecting rib (2) or a hollow groove (3), complementary male and female elements of a longitudinal press closure (4), which is capable of being opened and closed a plurality of times.

2. Flexible sheath according to Claim 1, characterised in that it consists of a single flexible strip (1) which is closed on itself by joining the two opposite sides which have the complementary closure elements (2, 3) or of a plurality of flexible strips (1) connected together by complementarity of shape of the elements (2, 3) of longitudinal closures (4) made on each longitudinal side of the various flexible strips (1).

3. Flexible sheath according to one of Claims 1 and 2, characterised in that it has an equal number of longitudinal closures (4) and flexible strips (1) which make it up.

4. Flexible sheath according to one of Claims 1 to 3, characterised in that the flexible strips (1) are inscribed in a rectangle of length between 10 and 70 cm, preferably between 20 and 40 cm, with a length to width ratio of between 2 and 40, preferably of between 10 and 35.

5. Flexible sheath according to one of Claims 1 to 4, characterised in that it consists of a single flexible strip (1).

6. Flexible sheath according to one of Claims 1 to 4, characterised in that it consists of a plurality of flexible strips (1).

7. Flexible sheath according to Claim 6, characterised in that the flexible strips (1) are connected together by the male element (2) of one strip (1) joined to the female element (3) of another strip (1) so as to form the closure (4).

8. Flexible sheath according to one of Claims 1 to 7, characterised in that it can be opened easily by simple pulling on the sheath.

9. Flexible sheath according to one of Claims 6 and 7, characterised in that it can be opened easily by pulling on at least one of the strips (1) making up the sheath.

10. Flexible sheath according to one of Claims 1 to 9, characterised in that it is opened by applying a pulling force less than 0.03 N, preferably between 0.005 N and 0.025 N, to at least one of the strips (1).

11. Method for placing casings (5) used in butchery for sausage production onto a carrier tube (6), characterised in that a flexible sheath defined according to one of Claims 1 to 10, supporting the casings, is fitted over the carrier tube (6), then in that the flexible sheath is withdrawn by opening at least one of the longitudinal closures (4) by a pulling force generally parallel to the axis of the tube (6) on at least one of the strips (1) which make up the sheath.

## Patentansprüche

1. Biegsame Hülle, die in Längsrichtung öffenbar ist, für das Stützen von natürlichen Schlauchhüllen von Innen her, bestimmt für ihre Austragung auf ein Füllrohr, dadurch gekennzeichnet, daß sie aus einem oder mehreren biegsamen Bändern (1) in im allgemeinen länglicher Form besteht, deren beide gegenüberliegende Seiten in Längsrichtung geradlinig sind und jede eine vorspringende Rippe (2) oder eine Hohlrinne (3) zeigen, welche komplementäre männliche und weibliche Elemente eines Längsverschlusses (4), der auf Druck arbeitet, sind, die mehrere Male geöffnet und geschlossen werden kann.

2. Biegsame Hülle nach Anspruch 1, dadurch gekennzeichnet, daß sie aus einem einzigen und auf sich selbst durch Funktion der beiden gegenüberliegenden Seiten, die die komplementären Verschlußelemente (2, 3) zeigen, verschlossenen biegsamen Band (1) oder aus mehreren biegsamen Bändern (1) besteht, die untereinander durch Form-Komplementarität von Elementen (2, 3) der Längsverschlüsse (4) verbunden sind, die an jeder Längsseite unterschiedlicher biegsamer Bänder (1) angeordnet sind, besteht.

3. Biegsame Hülle nach einem der Ansprüche 1 oder 2, dadurch gekennzeichnet, daß sie eine gleiche Anzahl von Längsverschlüssen (4) und biegsamen Bändern (1) zeigt, die sie aufbauen.

4. Biegsame Hülle nach einem der Ansprüche 1 bis 3, dadurch gekennzeichnet, daß sich die biegsamen Bänder (1) in ein Rechteck der Länge zwischen 10 und 70 cm, bevorzugt zwischen 20 und 40 cm, einschreiben lassen, mit einem Längen-Breiten-Verhältnis, das zwischen 2 und 40 liegt, bevorzugt zwischen 10 und 35 liegt.

5. Biegsame Hülle nach einem der Ansprüche 1 bis 4, dadurch gekennzeichnet, daß sie aus einem einzigen biegsamen Band (1) besteht.

6. Biegsame Hülle nach einem der Ansprüche 1 bis 4, dadurch gekennzeichnet, daß sie aus mehreren biegsamen Bändern (1) besteht.

7. Biegsame Hülle nach Anspruch 6, dadurch gekennzeichnet, daß die biegsamen Bänder (1) untereinander durch das männliche Element (2) eines Bandes (1) verbunden sind, das mit dem weiblichen Element (3) eines weiteren Bandes (1) derart gekoppelt ist, daß der Verschluß (4) gebildet wird.

8. Biegsame Hülle nach einem der Ansprüche 1 bis 7, dadurch gekennzeichnet, daß sie sich in leichter Weise durch einfachen Zug auf die Hülle öffnen läßt.

9. Biegsame Hülle nach einem der Ansprüche 6 oder 7, dadurch gekennzeichnet, daß sie sich in leichter Weise durch Zug auf wenigstens eines der Bänder (1), die die Hülle bilden, öffnen läßt.

10. Biegsame Hülle nach einem der Ansprüche 1 bis 9, dadurch gekennzeichnet, daß sie geöffnet wird, indem man auf wenigstens eines der Bänder (1) eine Zugkraft von weniger als 0,03 N aufgibt, die bevorzugt zwischen 0,005 N und 0,025 N liegt.

11. Verfahren für das Einrichten von Schlauchhüllen (5) auf einem Füllrohr (6), die in der Fleischerei für die Herstellung von Würsten oder Würstchen verwendet werden, dadurch gekennzeichnet, daß man auf das Füllrohr (6) eine biegsame Hülle aufzieht, die nach einem der Ansprüche 1 bis 10 definiert ist, die die Schlauchhüllen tragen, daß man dann die biegsame Hülle durch Öffnen wenigstens einer der Längsverschlüsse (4) abzieht, durch eine Zugkraft, die im allgemeinen parallel zu der Achse des Rohres (6) liegt, auf wenigstens eines der Bänder (1), die die Hülle bilden.
